(19) Europäisches Patentamt — European Patent Office — Office européen des brevets

(11) **EP 3 449 560 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
*H02P 25/024* (2016.01)   *H02P 3/18* (2006.01)
*H02P 23/00* (2016.01)   *H02P 25/22* (2006.01)
*H02P 27/08* (2006.01)   *H02P 27/06* (2006.01)
*H02P 23/20* (2016.01)

(21) Anmeldenummer: **16802088.1**

(22) Anmeldetag: **30.11.2016**

(86) Internationale Anmeldenummer:
**PCT/EP2016/079184**

(87) Internationale Veröffentlichungsnummer:
**WO 2017/186319 (02.11.2017 Gazette 2017/44)**

(54) **VERFAHREN ZUM AUSSCHALTEN EINER MEHRPHASIGEN ELEKTRISCHEN MASCHINE IN EINEM KRAFTFAHRZEUG**

METHOD FOR SWITCHING OFF A MULTI-PHASE ELECTRIC MACHINE IN A VEHICLE

PROCÉDÉ POUR COUPER UN POLYPHASEE MACHINE ÉLECTRIQUE DANS UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2016 DE 102016207386**
**01.09.2016 DE 102016216560**

(43) Veröffentlichungstag der Anmeldung:
**06.03.2019 Patentblatt 2019/10**

(73) Patentinhaber:
• **Robert Bosch GmbH**
**70442 Stuttgart (DE)**
• **SEG Automotive Germany GmbH**
**70499 Stuttgart (DE)**

(72) Erfinder: **ROESNER, Julian**
**74199 Untergruppenbach (DE)**

(74) Vertreter: **Steinbauer, Florian et al**
**Dehns Germany**
**Theresienstraße 6-8**
**80333 München (DE)**

(56) Entgegenhaltungen:
**DE-A1-102013 215 306    JP-A- S 605 786**
**US-A1- 2010 231 151**

**Beschreibung**

Die vorliegende Erfindung betrifft ein Verfahren zum Ausschalten einer mehrphasigen elektrischen Maschine in einem Kraftfahrzeug sowie eine Recheneinheit und ein Computerprogramm zu dessen Durchführung.

Stand der Technik

Elektrische Maschinen in Kraftfahrzeugen, die generatorisch oder motorisch betrieben werden können, sind bekannt. Derartige elektrische Maschinen weisen zumeist einen Läufer mit einer Erregerwicklung (Läuferwicklung) auf, die mit einem Erregerstrom bestromt werden kann, und einen Ständer mit einer mehrphasigen Ständerwicklung, an die eine mehrphasige Phasenspannung mit einem Phasenspannungsvektor angelegt werden kann.

Eine Nutzung der elektrischen Maschine in einem Kraftfahrzeug kann ein häufiges Ein- und Ausschalten der elektrischen Maschine erfordern. Als problematisch kann sich das Ausschalten der elektrischen Maschine insbesondere bei hohen Drehzahlen erweisen. Wird dabei zuerst die Phasenspannung ausgeschaltet, kommt es aufgrund des noch fließenden Erregerstroms zu einem Stromfluss durch die Inversdioden der MOSFETs und damit zu einem unerwünschten generatorischen Betrieb für diesen Betriebszustand. Wird zuerst eine Erregerspannung bzw. ein Erregerstrom ausgeschaltet, fällt die Polradspannung innerhalb einer Abklingzeit der Erregerspannung bzw. des Erregerstroms unter eine Spannungsgrenze, bei der es zu einem hohen Stromfluss in der elektrischen Maschine kommt. Durch die hierdurch entstehende Verlustleistung werden insbesondere die elektronischen Komponenten der elektrischen Maschine unnötig thermisch belastet.

Die DE 10 2013 215 306 A1 zeigt ein Verfahren zum Ausschalten einer mehrphasigen elektrischen Maschine in einem Kraftfahrzeug, wobei die mehrphasige elektrische Maschine einen Läufer mit einer Läuferwicklung und einen Stator mit einer mehrphasigen Statorwicklung aufweist, wobei in der elektrischen Maschine ein einen Polradspannungsvektor einer Polradspannung beeinflussender Parameter derart verändert wird, dass die Pohlradspannung einen ersten Schwellwert erreicht, wobei das Anlegen einer Phasenspannung mit einem Phasenspannungsvektor aktiviert wird, und wobei die Phasenspannung ausgeschaltet wird.

DIE US 2010 / 231151 A1 offenbart eine AC-Motorantriebssteuervorrichtung mit einem synchronen AC-Motor, einem Wechselrichter, einer Übersteuerungssteuereinheit, die über den Wechselrichter an den AC-Motor eine PWM-Spannung anlegt, und einer Rechteckwellenspannungs-Phasensteuereinheit, die eine Phase einer Rechteckwellenspannung steuert, und einen Impuls gemäß einem Drehmomentbefehl ausgibt.

Die JP S60 5786 A offenbart einen Motorantriebswechselrichter mit einem Gleichrichter, einem Glättungskondensator, einer Vielzahl von Schaltmitteln, einer Vielzahl von Regenerativstrom-Detektionsmitteln und einer Steuerschaltung zum Antreiben der Vielzahl von Schaltmitteln, wobei die Steuerschaltung dadurch gekennzeichnet ist, dass sie Mittel zum Empfangen der Steuerung des vom Stromdetektor ausgegebenen Regenerativstroms und zum Schalten der Steuerung der Vielzahl von Schaltmitteln vom Rechteckwellenmodus in den PWM-Modus aufweist.

Offenbarung der Erfindung

Erfindungsgemäß werden ein Verfahren zum Ausschalten einer mehrphasigen elektrischen Maschine in einem Kraftfahrzeug sowie eine Recheneinheit und ein Computerprogramm zu dessen Durchführung mit den Merkmalen der unabhängigen Patentansprüche vorgeschlagen. Vorteilhafte Ausgestaltungen sind Gegenstand der Unteransprüche sowie der nachfolgenden Beschreibung.

Die elektrische Maschine weist einen Läufer mit Läuferwicklung und einen Ständer mit einer mehrphasigen Ständerwicklung auf. Der Ständerwicklung ist insbesondere ein Stromrichter nachgeschaltet. Über den Stromrichter ist die elektrische Maschine insbesondere mit einem Bordnetz verbunden, insbesondere mit einem Gleichspannungs-Bordnetz.

Vorteile der Erfindung

Im Betrieb der elektrischen Maschine, insbesondere bei höheren Drehzahlen, typischerweise n>3000rpm, wird die elektrische Maschine in einem sog. Blockbetrieb betrieben. Hierbei werden die einzelnen Ständerwicklungen mit Spannungsblöcken beaufschlagt, wobei die zeitliche Ansteuerbreite der Spannungsblöcke vorzugsweise einem halben Gesamtumlauf (180°) des Läufers entspricht und wobei die einzelnen Spannungsblöcke der jeweiligen Phasen der Ständerwicklung vorzugsweise zueinander zeitlich versetzt sind. Dieser Betriebsmodus ist insbesondere bei großen Drehzahlen der elektrischen Maschine vorteilhaft, da hierdurch beispielsweise im Vergleich zu einem Betriebsmodus, in dem die elektrische Maschine im Pulsweitenmodulationsbetrieb (PWM) mit einer an die Drehzahl der elektrischen Maschine angepassten und somit entsprechend großen Taktfrequenz betrieben würde, keine nennenswerten Schaltverluste auftreten. Zum Ausschalten der elektrischen Maschine ist es erforderlich, dass sowohl der Erregerstrom als auch die Phasenspannung der elektrischen Maschine abgeschaltet bzw. möglichst schnell auf einen Wert, der dem Betrag nach etwa Null (0V bzw. 0A) entspricht, reduziert werden. Das Abschalten des Erregerstrom und der Phasenspannung sollte jedoch in einer Art und Weise erfolgen, so dass die eingangs bezeichneten Nachteile vermieden werden.

Hierzu wird zunächst der Erregerstrom soweit reduziert, dass die u.a. durch den Erregerstrom bestimmte Polradspannung einem ersten Schwellwert entspricht. Dieser Schwellwert entspricht in Betrag und Phase bzw. Richtung vorzugsweise der Phasenspannung. Bei einer weiteren Reduktion des Erregerstroms würde die Polradspannung kleiner als die Phasenspannung, wodurch ein Phasenstrom bewirkt würde, der zu einer nachteiligen thermischen Beeinträchtigung führen würde. Da im Blockbetrieb jedoch die Höhe der Phasenspannung durch die an den Stromrichter angelegte Gleichspannung der Fahrzeugbatterie vorgegeben ist, lässt sich die Phasenspannung im Blockbetrieb nur in ihrer Phasenlage bezüglich der Polradspannung, nicht jedoch betragsmäßig variieren.

Um eine weitere Reduzierung der Polradspannung bzw. des Erregerstrom und der Phasenspannung zu bewirken, wird erfindungsgemäß bei Erreichen des ersten Schwellwertes vom Blockbetrieb der elektrischen Maschine in einen sog. Pulsweitenmodulationsbetrieb den PWM-Betrieb gewechselt. Dieser Betriebsmodus zeichnet sich dadurch aus, dass die Ansteuerpulse bei jeweils konstanter Pulsfrequenz eine zueinander unterschiedliche Pulsbreite aufweisen. Hierdurch kann erreicht werden, dass die Phasenspannung simultan zur Polradspannung bzw. zum Erregerstrom reduziert werden kann, wodurch ein Stromfluss in der Ständerwicklung und damit eine thermische Beaufschlagung der elektrischen Maschine verhindert wird. Zudem wird der erste Schwellwert derart gewählt, dass beim Wechsel zwischen Blockbetrieb und PWM-Betrieb keine unerwünschten Stromspitzen entstehen. Dies ist insbesondere dann der Fall, wenn die Polradspannung und die Phasenspannung in Betrag und Richtung identisch sind und stets gleichermaßen reduziert werden. Somit werden beim Wechsel der Betriebsmodi der elektrischen Maschine (Blockbetrieb zu PWM-Betrieb) hohe elektrische und mechanische Belastungen vermieden.

Im Zuge des Verfahrens wird zudem ein optimaler Zeitpunkt zum Ausschalten der Phasenspannung der elektrischen Maschine bestimmt. Durch den PWM-Betrieb kann die Phasenspannung in Betrag und/oder Phase (Richtung) derart an die Polradspannung angepasst werden, so dass sich Phasenströme von im Wesentlichen 0A ergeben. Durch Ermittlung zumindest eines die Polradspannung beeinflussenden Parameters, vorzugsweise des Erregerstroms bzw. der Erregerspannung und/oder der Drehzahl der elektrischen Maschine, und dem Vergleich des Parameters mit einem weiteren Schwellwert wird ein optimaler Zeitpunkt zum Abschalten der Phasenspannung bestimmt. Hierbei können die die Polradspannung beeinflussenden Parameter grundsätzlich beliebig angepasst werden, wobei vorzugsweise die Drehzahl der elektrischen Maschine ein freier Parameter ist, der nahezu beliebige Werte annehmen kann, und der Erregerstrom bzw. die Erregerspannung auf einen Wert, der dem Betrage nach im wesentlichen 0A bzw. 0V entspricht, geregelt werden.

Grundsätzlich versteht sich, dass eine Anpassung, insbesondere eine Verringerung, des Erregerstrom bzw. der Erregerspannung während des gesamten Ausschaltvorgangs durch den Feldregler geregelt erfolgen kann. Ferner ist es auch möglich, dass der Erregerstrom ausgeschaltet wird und die jeweiligen Schritte des Ausschaltverfahrens während eines Abklingens des Erregerstroms innerhalb der Abklingzeit bewirkt werden. Beim Ausschalten des Erregerstroms durch den Feldregler kann dieser die Läuferwicklung von der angelegten Erregerspannung trennen. Auch eine Reduktion der Spannung bzw. des Stroms auf einen Wert von in etwa 0V bzw. 0A kann durch ein Ausschalten erfasst sein.

Es wird somit ermöglicht, die elektrische Maschine unabhängig von einer Drehzahl der elektrischen Maschine und/oder einer Brennkraftmaschine des Kraftfahrzeugs auszuschalten. Insbesondere wird es ermöglicht, die elektrische Maschine bei hohen Drehzahlen auf schonende Weise auszuschalten.

Das Verfahren eignet sich gleichermaßen für einen generatorischen als auch einen motorischen Betrieb der elektrischen Maschine und für sämtliche Arten von Kraft- und Nutzfahrzeugen, insbesondere auch für Hybridfahrzeuge. Insbesondere wird es ermöglicht, die elektrische Maschine motorisch zu betreiben und die Brennkraftmaschine zu unterstützen. Auch bei hohen Drehzahlen kann die elektrische Maschine problemlos und ohne große Belastungen abgeschaltet werden. Dabei muss beispielsweise nicht abgewartet werden, bis die Drehzahl einen zulässigen Grenzwert unterschreitet, um die elektrische Maschine auszuschalten. Die elektrische Maschine kann zu einem zweckmäßigen bestmöglichen Zeitpunkt ausgeschaltet werden.

Auch für den Fall, dass die elektrische Maschine während des Ausschaltvorgangs eine Drehmomentenanforderung erhält, kann durch Wiedereinschalten des Erregerstrom bzw. der Phasenspannung direkt wieder in den motorischen oder generatorischen Betrieb gewechselt werden, da während des Ausschaltvorgangs Phasenspannung und Polradspannung derart geregelt werden, dass der Phasenstrom vorzugsweise im wesentlichen 0A entspricht. Hierdurch wird das Auftreten von Spannungs- bzw. Stromspitzen vermieden und das Ausschalten bzw. Einschalten der elektrischen Maschine mit möglichst geringer mechanischer Belastung ermöglicht.

Eine erfindungsgemäße Recheneinheit, z.B. ein Steuergerät eines Kraftfahrzeugs, ist, insbesondere programmtechnisch, dazu eingerichtet, ein erfindungsgemäßes Verfahren durchzuführen.

Auch die Implementierung des Verfahrens in Form eines Computerprogramm ist vorteilhaft, da dies besonders geringe Kosten verursacht, insbesondere wenn ein ausführendes Steuergerät noch für weitere Aufgaben genutzt wird und daher ohnehin vorhanden ist.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und die Ausführungsbeispiele werden im Folgenden unter Bezugnahme auf die Zeichnung beschrieben.

Kurze Beschreibung der Zeichnungen

Figur 1     zeigt schematisch eine Anordnung aus einer Brennkraftmaschine und einer elektrischen Maschine eines Kraftfahrzeugs, die zur Durchführung einer Ausführungsform der Erfindung eingerichtet sind;

Figur 2     zeigt schaltplanartig eine fünf-phasige elektrische Maschine eines Kraftfahrzeugs, die dazu eingerichtet ist, eine Ausführungsform der Erfindung durchzuführen;

Figur 3a    zeigt schematisch ein einphasiges Ersatzschaltbild der fünf-phasigen elektrischen Maschine aus Figur 2;

Figur 3b    zeigt schematisch eine PWM-Ansteuerung einer 5-phasigen elektrischen Maschine;

Figur 3c    zeigt schematisch eine Block-Ansteuerung einer 5-phasigen elektrischen Maschine;

Figur 4     zeigt schematisch eine bevorzugte Ausführung eines erfindungsgemäßen Verfahrens zum Ausschalten einer elektrischen Maschine als ein Blockschaltbild;

Figur 5a, b  zeigt schematisch einen Verlauf von Phasenspannung und Phasenstrom bei der bevorzugten Ausführung des erfindungsgemäßen Verfahrens zum Ausschalten einer elektrischen Maschine gemäß Figur 4; und

Figur 6a-c   zeigt schematisch Zeigerdiagramme, die im Zuge einer Ausführungsform der Erfindung bestimmt werden können.

Ausführungsform(en) der Erfindung

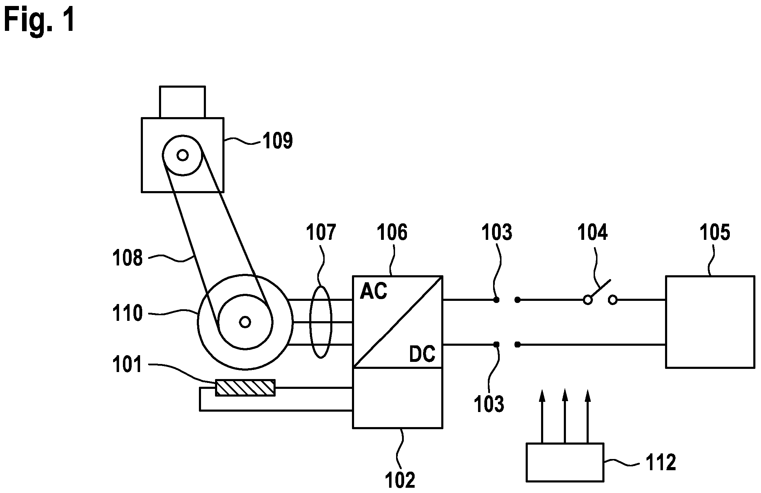

Figur 1 zeigt schematisch Komponenten eines Kraftfahrzeugs. Das Kraftfahrzeug weist eine elektrische Maschine 110 auf, wobei im Folgenden ohne Beschränkung der Allgemeinheit von einem fremderregten Synchrongenerator ausgegangen wird. Die elektrische Maschine 110 kann über eine Brennkraftmaschine 109 des Kraftfahrzeugs beispielsweise generatorisch betrieben werden. Die elektrische Maschine 110 ist über entsprechende Kopplungsmittel, beispielsweise eine mechanische Verbindung 108 in Form eines Riementriebs oder einer Welle, mit der Brennkraftmaschine 109 drehmomentschlüssig verbunden. Alternativ kann die elektrische Maschine 110 auch motorisch betrieben werden und kann dabei die Brennkraftmaschine 109 unterstützen.

Die elektrische Maschine 110 ist elektrisch mit einem Stromrichter 106 verbunden, wobei mehrere Phasenanschlüsse 107 vorgesehen sind. Der Stromrichter 106 kann als Gleich- und als Wechselrichter betrieben werden. Die mehreren Phasenanschlüsse 107 sind Phasenanschlüsse einer mehrphasigen Ständerwicklung eines Ständers der elektrische Maschine 110. Gleichspannungsseitig ist über einen Feldregler 102 eine Läuferwicklung 101 der elektrischen Maschine 110 angeschlossen. Der Feldregler 102 ist für die Ansteuerung der Läuferwicklung 101 zuständig. Über Gleichspannungsanschlüsse 103 kann ein Energiespeicher, beispielsweise eine Fahrzeugbatterie 105, an die Gleichspannungsseite des Stromrichters 106 angebunden werden. Über ein Schaltelement 104 kann die Fahrzeugbatterie 105 elektrisch mit der Gleichspannungsseite des Stromrichters 106 verbunden und von dieser getrennt werden.

Eine als Steuergerät 112 ausgebildete Recheneinheit ist, insbesondere programmtechnisch, dazu eingerichtet, eine Ausführungsform des erfindungsgemäßen Verfahrens durchzuführen. Insbesondere steuert das Steuergerät 112 den Feldregler 102 und den Stromrichter 106 entsprechend der Erfindung an.

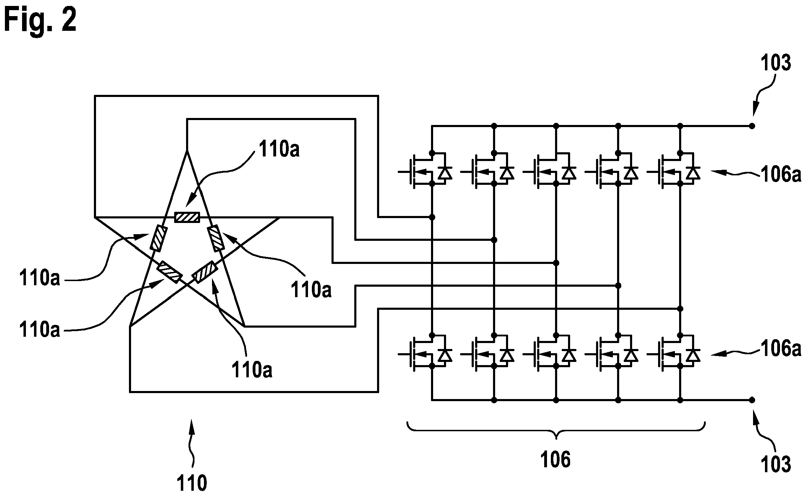

In Figur 2 ist die elektrische Maschine 110 schaltplanartig dargestellt. Die elektrische Maschine 110 ist in diesem speziellen Beispiel als eine fünf-phasige elektrische Maschine dargestellt. Die elektrische Maschine 110 weist einen Ständer mit einer fünf-phasigen Ständerwicklung 110a auf. Der Stromrichter 106 weist mehrere elektrische Schaltelemente auf, die in diesem Beispiel als MOSFETs 106a (Metall-Oxid-Halbleiter-Feldeffekttransistor) ausgebildet sind. MOSFETs entsprechen schaltungstechnisch einem Transistor und einer in Sperrrichtung geschalteten Inversdiode. Die MOSFETs 106a sind beispielsweise einerseits über Stromschienen mit den Ständerwicklungen 110a und andererseits mit den Gleichspannungsanschlüssen 103 verbunden.

Wird die elektrische Maschine 110 in einem generatorischen Betrieb betrieben, wird in der Ständerwicklung 110a eine fünf-phasige Wechselspannung, die sogenannte Phasenspannung, erzeugt. Durch zweckmäßiges getaktetes Ansteuern der MOSFETs 106a wird diese fünf-phasige Wechselspannung in eine Gleichspannung gerichtet. Mittels dieser umgewandelten Gleichspannung kann beispielsweise die Fahrzeugbatterie 105 aufgeladen werden.

Wird die elektrische Maschine 110 in einem motorischen Betrieb betrieben, wird durch zweckmäßiges getaktetes Ansteuern der MOSFETs 106a die Gleichspannung der Fahrzeugbatterie 105 in die fünf-phasige Phasenspannung mit einem umlaufenden Phasenspannungsvektor gewandelt. Das zweckmäßige, getaktete Ansteuern der MOSFETs 106a erfolgt dabei jeweils durch das Steuergerät 112.

Es sei angemerkt, dass die vorliegende Erfindung nicht auf eine fünf-phasige elektrische Maschine beschränkt sein soll, sondern für elektrische Maschinen mit einer zweckmäßigen Anzahl an Phasenanschlüsse 107 geeignet ist.

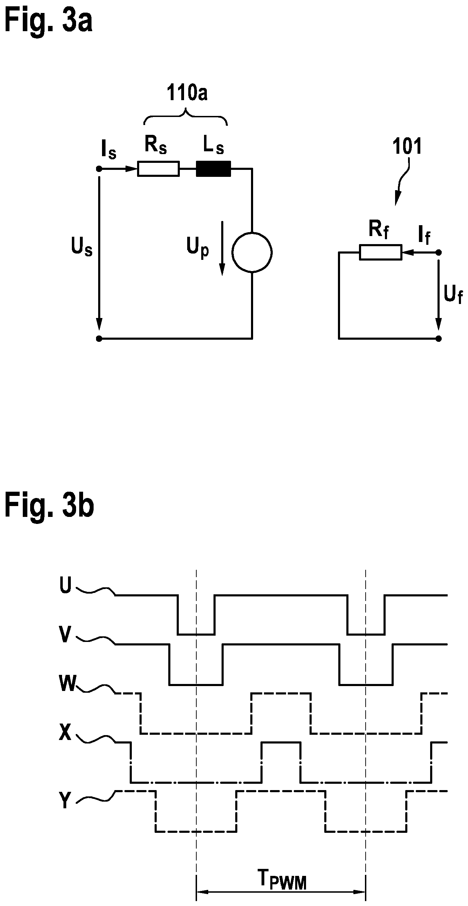

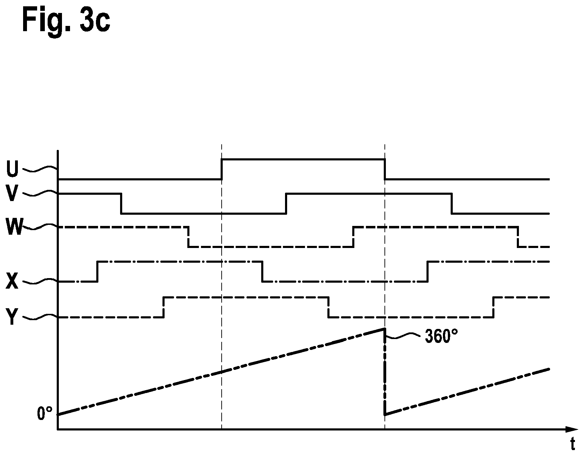

Bevorzugte Ausführungen des Verfahrens zum Ausschalten der elektrischen Maschine 110 werden im Folgenden unter Bezug auf die Figuren 3, 4 und 5 beschrieben. Weiterhin erfolgt diese Beschreibung anhand des speziellen Beispiels eines motorischen Betriebs der elektrischen Maschine 110. Insbesondere werden die bevorzugten Ausführungen der erfindungsgemäßen Verfahren durch das Steuergerät 112 ausgeführt. Das Steuergerät steuert im Zuge dessen insbesondere den Feldregler 102, den Stromrichter 106 und optional auch das Schaltelement 104 entsprechend an.

Figur 3a zeigt schematisch ein einphasiges Ersatzschaltbild einer fremderregten Synchronmaschine im Allgemeinen und der fünf-phasigen elektrischen Maschine 110 gemäß Figur 2 im Speziellen. Die Läuferwicklung 101 entspricht in dem Ersatzschaltbild einem Widerstand $R_f$. Die Ständerwicklung 110a entspricht in dem Ersatzschaltbild einer Reihenschaltung aus einem Widerstand Rs und einer Induktivität Ls.

In Figur 3b ist exemplarisch anhand einer 5 phasigen (U, V, W, X, Y) Ständerwicklung 110a eine typische PWM-Ansteuerung 220 einer elektrischen Maschine 110 dargestellt. Hierbei weisen die Ansteuerpulse bei jeweils konstanter Pulsfrequenz bzw. zeitlichem Abstand $T_{PWM}$ der jeweiligen Pulse zueinander eine zueinander unterschiedliche Pulsbreite auf.

In Figur 3c ist exemplarisch anhand einer 5 phasigen (U, V, W, X, Y) Ständerwicklung 110a eine typische Blockansteuerung 210 einer elektrischen Maschine 110 dargestellt. Zudem ist im gleichen Zeitabschnitt der Winkelverlauf des Läufers von 0° bis 360 ° dargestellt. Wie zu erkennen ist, weisen die Ansteuerblöcke der jeweiligen Phasen (U, V, W, X, Y) eine Ansteuerbreite von 180° in Relation zum Läuferumlauf auf.

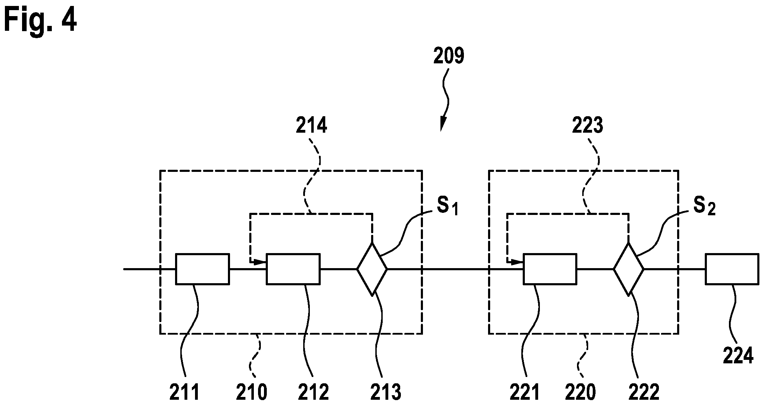

In Figur 4 ist eine bevorzugte Ausführungsform eines erfindungsgemäßen Verfahrens zum Ausschalten 209 bzw. Abschalten der elektrischen Maschine 110 als ein Blockschaltbild dargestellt.

In dem motorischen Betrieb wird die elektrische Maschine 110 mit einer Erregerspannung $U_f$ und der Phasenspannung Us versorgt und wandelt diese elektrische Energie in mechanische Energie, um die Brennkraftmaschine 109 mit dieser mechanischen Energie zu unterstützen. Betrag bzw. Amplitude dieser Phasenspannung Us werden insbesondere durch die an den Stromrichter 106 angelegte Gleichspannung der Fahrzeugbatterie 105 als Versorgungsspannung vorgegeben. Die Erregerspannung $U_f$ wird mittels des Feldreglers 102 an die Läuferwicklung 101 angelegt, wodurch in der Läuferwicklung 101 ein Erregerstrom $I_f$ erzeugt wird. Der Erregerstrom $I_f$ wird insbesondere mittels eines PI-Reglers auf einen gewünschten Sollwert geregelt. Der Erregerstrom $I_f$ induziert bei drehendem Läufer der elektrischen Maschine in der Statorwicklung 110a die Polradspannung $U_p$. Die Polradspannung $U_p$ ist dabei abhängig von der Drehzahl $\omega$ und von dem Betrag des Erregerstroms $I_f$. Die genaue Bestimmung der Polradspannung $U_p$ wird nachfolgend angegeben.

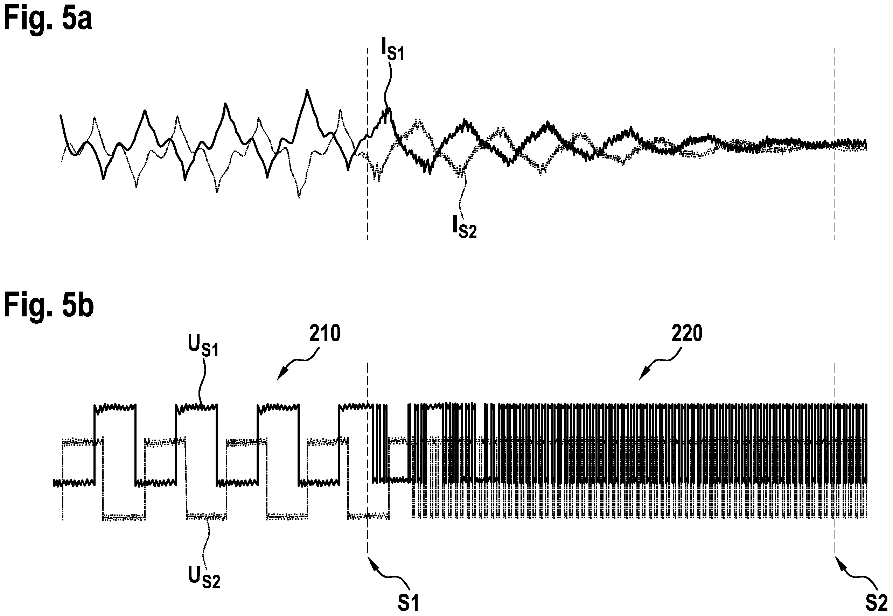

Die elektrische Maschine 110 ist vorliegend zunächst eingeschaltet und befindet sich im Blockbetrieb 210, wobei die elektrische Maschine 110 die Brennkraftmaschine 109 unterstützen kann. Hierbei kann in einem Schritt 211 ein Drehmoment der elektrischen Maschine 110 bzw. der Brennkraftmaschine 109 eingestellt werden. Das Drehmoment kann dabei durch Variation eines Polradwinkels $\vartheta$ eingestellt werden, welcher wiederum durch die Richtung des Phasenspannungsvektors Us eingestellt wird, die wiederum durch entsprechende Ansteuerung des Stromrichters 106 eingestellt wird. Über einen zweckmäßigen Regelkreis wird der Polradwinkel $\vartheta$ so variiert, dass ein gewünschtes Drehmoment eingestellt wird (vgl. hierzu insbesondere Figur 5a). Wird seitens der elektrischen Maschine 110 kein Drehmoment angefordert bzw. kein Drehmoment auf die Brennkraftmaschine 109 übertragen, befindet sich die elektrische Maschine 110 in einer Leerlaufphase 212.

In der Leerlaufphase 212 dreht sich die elektrische Maschine 110 aufgrund der drehmomentschlüssigen Verbindung mit der Brennkraftmaschine 109 zumindest mit der vorgegebenen Drehzahl $\omega$ der Brennkraftmaschine 109, sofern die elektrische Maschine 110 nicht, beispielsweise durch einen Freilauf, von der Brennkraftmaschine 109 entkoppelt ist. Zur Minimierung der Verluste der elektrischen Maschine 110 ist ein Ausschalten 209 der elektrischen Maschine 110 vorteilhaft, so dass sich das Verlustmoment der elektrischen Maschine 110 lediglich auf das vergleichsweise geringe mechanische Reibmoment der elektrischen Maschine 110 reduziert.

Das Ausschalten der elektrischen Maschine 110 erfolgt dabei im Zuge der bevorzugten Ausführungsform des erfindungsgemäßen Verfahrens.

Die elektrische Maschine 110 wird während der Leerlaufphase 212 zunächst in einem Blockbetrieb 210 betrieben, in dem an die Ständerwicklung 110a eine blockförmige Schaltspannung angelegt wird. Zum Abschalten der elektrischen Maschine 110 während der Leerlaufphase 212 sind sowohl der Erregerstrom $I_f$ bzw. hieraus abgeleitete Größen wie die Polradspannung $U_p$ und die Phasenspannung Us auf einen betragsmäßig möglichst kleinen Wert, insbesondere dem Betrage nach null, zu reduzieren. Um die eingangs genannten Nachteile, die mit einem Abschalten des Erregerstrom $I_f$ und/oder der Phasenspannung Us einhergehen können, zu vermeiden, wird der Ausschaltvorgang gemäß einer bevorzugten Ausführungsform gemäß der nachfolgenden Schritte bewirkt. Grundsätzlich versteht sich, dass ein Abschalten 209 der elektrischen Maschine 210 auch außerhalb einer Leerlaufphase 212 erfolgen kann.

In Schritt 213 wird zunächst wenigstens ein die Polradspannung $U_p$ beeinflussender Parameter bestimmt. Vorzugsweise werden ein Betrag und eine Richtung des Polradspannungsvektors als der die Polradspannung $U_p$ beeinflussende Parameter bestimmt. Alternativ oder zusätzlich können auch vorzugsweise der Betrag des Erregerstroms $I_f$ und/oder die Drehzahl $\omega$ der elektrischen Maschine 110 als der wenigstens eine die Polradspannung $U_p$ beeinflussende Parameter bestimmt werden. Die Drehzahl $\omega$ der elektrischen Maschine 110 und der Betrag des Erregerstroms $I_f$ sind zumeist ohnehin bekannt bzw. werden in dem Kraftfahrzeug ohnehin bestimmt. Daher ist hier kein zusätzlicher Aufwand nötig, um den Betrag des Erregerstroms $I_f$ und/oder die Drehzahl $\omega$ der elektrischen Maschine 110 zu bestimmen.

In diesem speziellen Beispiel wird der Betrag des Polradspannungsvektors als ein die Polradspannung $U_p$ beeinflussender Parameter bestimmt. Dabei wird der Betrag insbesondere in Abhängigkeit von dem Erregerstrombetrag $I_f$ und der Drehzahl $\omega$ bestimmt. Diese Bestimmung erfolgt insbesondere nach der folgenden Formel:

$$U_p = \Psi_R \frac{2\pi}{60} \omega,$$

wobei

$\Psi_R$ eine vom Erregerstrom $I_f$ erzeugte Flussverkettung ist. Aufgrund von Sättigungseffekten ist der Zusammenhang zwischen Erregerstrom $I_f$ und Flussverkettung $\Psi_R$ nicht linear. Insbesondere ist dieser Zusammenhang zwischen Erregerstrom $I_f$ und Flussverkettung $\Psi_R$ als eine Kennlinie oder in Form eines Ausgleichspolynoms hinterlegt, insbesondere in dem Steuergerät 112. Die Richtung des Polradspannungsvektors ergibt sich zwanglos aus der Konstruktion und aktuellen Lage des Läufers.

Ein die Polradspannung beeinflussender Parameter, insbesondere der Erregerstrom $I_f$, wird in einem weiteren Schritt 214 reduziert und es wird überprüft, ob Betrag und/oder Richtung des Polradspannungsvektors $U_p$ jeweils einen ersten Schwellwert $S_1$ erreichen. Der jeweilige Schwellwert $S_1$ wird dabei derart gewählt, dass der Schwellwert $S_1$ in einem jeweiligen Zeitpunkt in Betrag und/oder Richtung der Phasenspannung Us entspricht. Würde der Erregerstrom $I_f$ soweit reduziert, dass die Polradspannung $U_p$ kleiner wäre als die Phasenspannung Us, hätte dies einen Stromfluss $I_s$ in der Phasenwicklung 107 zur Folge, was wiederum eine Verlustleistung der elektrischen Maschine 110 zur Folge hätte. Um dies zu vermeiden, müsste entsprechend auch der Betrag und/oder die Phase der Phasenspannung Us nachgeführt werden, sodass der Strom $I_s$ in der Phasenwicklung während des Ausschaltvorgangs 209 Netto stets Null beträgt. Dies ist jedoch im Blockbetrieb 210 nicht möglich, da hier lediglich die Phase, nicht jedoch der Betrag der Phasenspannung Us einstellbar ist. Somit wird bei Erreichen des Schwellwert $S_1$ der Blockbetrieb 210 deaktiviert und der PWM-Betrieb 220 aktiviert. Zudem sind die innerhalb des Blockbetriebs 210 in den Ständerphasen bewirkten Ströme $I_s$ mit einer überlagerten Oberwelligkeit behaftet, weshalb auch für den Fall, dass im zeitlichen Mittel $U_p = U_S$ gilt, ein schnelles Aus- bzw. Einschalten problematisch ist, da hierdurch in nicht unerheblichem Umfang eine Polradspannung $U_p$ induzierbar ist.

Somit ist ein Umschalten vom Blockbetrieb 210 in einen PWM-Betrieb 220 von Vorteil, da hierdurch - insbesondere durch die entsprechende Wahl des Schwellwert $S_1$ - unerwünschte Stromspitzen und hohe elektrische und mechanische Belastungen der elektrischen Maschine 110 vermieden werden können.

Dabei wird in Schritt 221 in einem PWM-Betrieb an die Ständerwicklung 110a durch Pulsbreitenmodulation (PWM) der Versorgungsspannung eine Phasenspannung Us mit einem Phasenspannungsvektor angelegt, der in Betrag und Richtung einem aktuell vorherrschenden Polradspannungsvektor einer Polradspannung $U_p$ entspricht. Der Betrag des Polradspannungsvektors lässt sich unter Beibehaltung der Drehzahl $\omega$ der elektrischen Maschine 110 bzw. der Brennkraftmaschine 109 insbesondere über den Erregerstrom $I_f$ - als einen die Polradspannung beeinflussenden Parameter - einstellen. Dies hat den Vorteil, dass ein Abschalten der elektrischen Maschine 110 auch bei hohen Drehzahlen problemlos möglich ist. Der Erregerstrom $I_f$ wird so lange weiter verringert, angedeutet durch Bezugszeichen 223, bis der Betrag des Polradspannungsvektors verschwindet. Hierbei erreicht der Erregerstrom $I_f$ einen weiteren Schwellwert $S_2$. Währenddessen wird auch die Phasenspannung Us entsprechend nachgeführt, so dass der Phasenspannungsvektor Us weiterhin dem Polradspannungsvektor $U_p$ in Betrag und Richtung entspricht (ebenfalls angedeutet durch Bezugszeichen 223).

Betrag und Phase des Phasenspannungsvektors Us und des Polradspannungsvektors $U_p$ werden jeweils im Schritt 222 ermittelt und miteinander verglichen. Bei einer Abweichung von Betrag und/oder Phase des Phasenspannungsvektors $U_s$ und des Polradspannungsvektors $U_p$ können diese, insbesondere mittels des Reglers 112, nachgeregelt werden. Erreicht der Polradspannung beeinflussende Parameter den weiteren Schwellwert $S_2$, wird in einem weiteren Schritt 224 die Phasenspannung Us ausgeschaltet. Ein Ausschalten der Phasenspannung Us nachdem der die Polradspannung beeinflussende Parameter den Schwellwert $S_2$ erreicht hat (dies entspricht insbesondere dem Erregerstrom $I_f$ = 0A), ist unproblematisch, da aufgrund des nicht mehr vorhanden Erregerstroms $I_f$ die elektrische Maschine 110 vorerst nicht mehr generatorisch betreibbar ist.

Ein Ausschalten der Phasenspannung Us kann entweder durch das Trennen der Phasenanschlüsse 107 durch den Stromrichter 106 erfolgen oder die Phasenspannung Us kann auch auf einen Wert von in etwa 0V reduziert werden. Eine Trennung der Phasenanschlüsse 107 durch den Stromrichter 106 ist daher nicht grundsätzlich erforderlich, da auch der Erregerstrom $I_f$ und die Phasenspannung Us, insbesondere simultan, zur An-

passung der Phasenspannung $U_S$ auf die Polradspannung $U_p$, auf einen Wert von 0A bzw. 0V reduziert werden können, und dies faktisch auch einem Abschalten entspricht.

Grundsätzlich versteht sich, dass eine Anpassung, insbesondere eine Verringerung, des Erregerstrom $I_f$ bzw. der Erregerspannung während des gesamten Ausschaltvorgangs durch den Feldregler 102 geregelt erfolgen kann. Ferner ist es auch möglich, dass der Erregerstrom $I_f$ ausgeschaltet wird und die jeweiligen Schritte des Ausschaltverfahrens 209 während eines Abklingens des Erregerstroms $I_f$ innerhalb der Abklingzeit bewirkt werden. Beim Ausschalten des Erregerstroms $I_f$ durch den Feldregler 102 trennt dieser die Läuferwicklung 101 von der angelegten Erregerspannung $U_f$.

In Figur 5 ist der Verlauf eines Phasenstroms $IS_1$ einer ersten Phase und der Verlauf eines Phasenstroms $I_{S2}$ einer weiteren Phase (vgl. Figur 5a) dem Verlauf der Phasenspannungen $U_{S1}$ und $U_{S2}$ der jeweiligen Phasen (vgl. Figur 5b) im zeitlichen Verlauf exemplarisch gegenübergestellt. Hierbei ist zu erkennen, wie die Phasenspannungen $U_{S1}$ und $U_{S2}$ nach Erreichen eines ersten Schwellwerts $S_1$ vom Blockbetrieb 210 in den PWM-Betrieb 220 übergehen. Es ist ferner zu erkennen, dass die Phasenströme $I_{S1}$ und $I_{S2}$ während des Blockbetriebs 210 und auch noch kurz nach dem Umschalten vom Blockbetrieb 210 in den PWM-Betrieb 220 mit einer Oberschwingung überlagert sind, welche im Falle eines schnelles Aus- bzw. Einschalten problematisch sind, da hierdurch in nicht unerheblichem Umfang eine Polradspannung $U_p$ induzierbar ist. Die gesamte Spannungswelligkeiten innerhalb der Phasenströme $I_{S1}$ und $I_{S2}$ werden daher innerhalb des PWM-Betriebs 220 auf einen Schwellwert $S_2$ (Wert nahe Null) reduziert, wobei dann in diesem Zustand die elektrische Maschine 110 ausgeschaltet werden kann, ohne dabei eine nennenswerte Polradspannung $U_p$ zu induzieren.

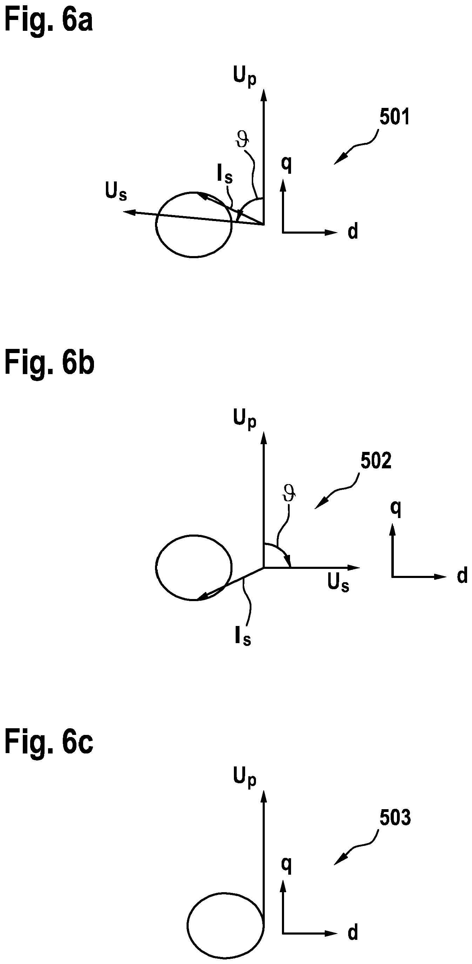

Ein Zusammenhang zwischen der Phasenspannung Us, der Polradspannung $U_p$, dem Phasenstrom $I_S$ und dem Erregerstrom $I_f$ und damit der theoretische Hintergrund der erfindungsgemäßen Verfahren werden anhand von Figur 6 genauer erläutert.

In Figur 6 sind dabei Zeigerdiagramme bzw. dq-Diagramme 501, 502 und 503 einer fremderregten Synchronmaschine, insbesondere der fünf-phasigen elektrischen Maschine 110 gemäß Figur 2, in einem drehfeldfesten dq-Koordinatensystem beispielhaft dargestellt, wie sie im Zuge einer Ausführungsform der Erfindung bestimmt werden können.

Die Polradspannung $U_p$ liegt dabei definitionsgemäß auf der q-Achse und ist als ein erster Zeiger dargestellt. Die q-Achse bildet die sogenannte Erregerachse. Die d-Achse ist dabei elektrisch orthogonal zu der q-Achse. Die Phasenspannung Us ist als ein zweiter Zeiger dargestellt und ist um einen Polradwinkel ϑ gegenüber der Polradspannung $U_p$ verschoben. Der Polradwinkel ϑ wird auch als Lastwinkel bezeichnet. Im generatorischen Betrieb (vgl. Figur 6b) der elektrischen Maschine 110 nimmt der Polradwinkel ϑ positive Werte an, ein Polrad bzw. der Erreger "eilt voraus". Im motorischen Betrieb der elektrischen Maschine 110, wie er in Figur 6a dargestellt ist, nimmt der Polradwinkel ϑ negative Werte an, das Polrad bzw. der Erreger "eilt nach".

Im Blockbetrieb ist die Höhe der Phasenspannung Us durch die an den Stromrichter 106 angelegte Gleichspannung der Fahrzeugbatterie 105 vorgegeben. Die Phasenspannung Us lässt sich daher im Blockbetrieb nur in ihrer Phasenlage bezüglich der Polradspannung $U_p$ variieren, also über ihren Polradwinkel ϑ gegenüber der Polradspannung $U_p$. Die Phasenlage bzw. der Polradwinkel ϑ kann mittels des Stromrichters 106 zweckmäßig eingestellt werden.

Der Phasenstrom $I_S$ ist in dem dq-Koordinatensystem als ein dritter Vektor dargestellt. Es ergibt sich ein Phasenstromvektor, dessen Ortskurve bei Änderung des Polradwinkels von 0°-360° dem dargestellten Kreis entspricht.

In Figur 6a ist ein erstes dq-Diagramm 501 für eine elektrische Maschine 110 im motorischen Betrieb dargestellt, wobei der Polradspannungsvektor $U_p$ als der wenigstens eine die Polradspannung beeinflussende Parameter nicht den ersten Schwellwert $S_1$ erreicht. Dabei ist zu erkennen, dass für keinen Polradwinkel ϑ der Phasenstrom $I_S$ zu Null wird. Ein Ausschalten des Stromrichters 106 hätte daher einen generatorischen Stromfluss über die Inversdioden der MOSFETs 106a zur Folge.

In Figur 6b ist ein weiteres dq-Diagramm 502 für eine elektrische Maschine 110 im generatorischen Betrieb dargestellt, wobei der Polradspannungsvektor $U_p$ als der wenigstens eine die Polradspannung beeinflussende Parameter nicht den ersten Schwellwert $S_1$ erreicht. Dabei ist zu erkennen, dass für keinen Polradwinkel ϑ der Phasenstrom $I_S$ zu Null wird. Ein Ausschalten des Stromrichters 106 hätte daher einen verlustbehafteten Stromfluss über die Inversdioden der MOSFETs 106a zur Folge.

In Figur 6c ist ein weiteres dq-Diagramm 503 dargestellt, wobei der Polradspannungsvektor $U_p$ als der wenigstens eine die Polradspannung beeinflussende Parameter den ersten Schwellwert $S_1$ erreicht. Dieser Zustand ist sowohl aus dem motorischen Betrieb der elektrischen Maschine 110 (vgl. Figur 6a) als auch aus dem generatorischen Betrieb der elektrischen Maschine 110 (vgl. Figur 6b) erreichbar. Der Polradwinkel ϑ beträgt dabei 0° so dass die Phasenlage der Phasenspannung Us einer Phasenlage der Polradspannung $U_p$ entspricht. Da Phasenspannung Us und Polradspannung $U_p$ nach Betrag und Richtung gleich sind, wird dabei theoretisch kein Phasenstrom $I_S$ erzeugt. Jedoch sind die innerhalb des Blockbetriebs 210 in den Ständerphasen bewirkten Ströme $I_s$ mit einer überlagerten Oberwelligkeit behaftet, weshalb auch für den Fall, dass im zeitlichen Mittel $U_p = U_S$ gilt, ein schnelles Aus- bzw. Einschalten problematisch ist, da hierdurch in nicht unerheblichem Umfang eine Polradspannung $U_p$ induzierbar ist. Ein Wechsel von Blockbetrieb in PWM-Betrieb zur weiteren Reduzierung des Erregerstroms $I_f$ und der Phasenspannung Us ist daher vorteilhaft, um ein besonders sanftes Ausschalten der elektrischen Maschine 110 zu ermöglichen.

**Patentansprüche**

1. Verfahren zum Ausschalten einer mehrphasigen elektrischen Maschine (110) in einem Kraftfahrzeug, wobei die mehrphasige elektrische Maschine (110) einen Läufer mit einer Läuferwicklung (101) und einen Ständer mit einer mehrphasigen Ständerwicklung (110a) aufweist,

   - wobei in einem Blockbetrieb (210) der elektrischen Maschine (110) ein einen Polradspannungsvektor ($U_p$) einer Polradspannung beeinflussender Parameter derart verändert wird, dass die Polradspannung einen ersten Schwellwert ($S_1$) erreicht,
   - wobei der Blockbetrieb (210) bei Erreichen des ersten Schwellwerts ($S_1$) deaktiviert und ein PWM-Betrieb (220) zum Anlegen einer Phasenspannung mit einem Phasenspannungsvektor ($U_s$) aktiviert wird,
   - wobei der Phasenspannungsvektor ($U_s$) und der Polradspannungsvektor ($U_p$) im PWM-Betrieb (220) solange verändert werden, bis der die Polradspannung beeinflussende Parameter einen weiteren Schwellwert ($S_2$) erreicht,
   - wobei die Phasenspannung ausgeschaltet wird, wenn der weitere Schwellwert ($S_2$) erreicht wird.

2. Verfahren nach Anspruch 1, wobei ein Betrag und/oder eine Richtung des Polradspannungsvektors ($U_p$) als der wenigstens eine den Polradspannungsvektors ($U_p$) beeinflussende Parameter verwendet werden, wobei der Betrag des Polradspannungsvektors ($U_p$) vorzugsweise reduziert wird.

3. Verfahren nach Anspruch 1 oder 2, wobei der erste Schwellwert einem Betrag und/oder einer Richtung des Phasenspannungsvektors ($U_s$) der im Blockbetrieb (210) anliegenden Phasenspannung entspricht.

4. Verfahren nach einem der vorstehenden Ansprüche, wobei der Betrag des Erregerstroms ($I_f$) und/oder die Drehzahl ($\omega$) der elektrischen Maschine (110) als der wenigstens eine die Polradspannung beeinflussende Parameter verwendet werden (210).

5. Verfahren nach einem der vorstehenden Ansprüche, wobei der Phasenspannungsvektor ($U_s$) und der Polradspannungsvektor ($U_p$) im PWM-Betrieb (220) derart verändert werden, insbesondere Betragsmäßig reduziert werden, dass ein in der Ständerwicklung (110a) fließender Phasenstrom (Is) stets dem Betrage nach in etwa dem Wert Null entspricht.

6. Verfahren nach einem der vorstehenden Ansprüche, wobei der Betrag des weiteren Schwellwerts ($S_2$) des die Polradspannung beeinflussenden Parameters, insbesondere des Erregerstroms ($I_f$) im PWM-Betrieb, in etwa dem Wert Null entspricht.

7. Verfahren nach einem der vorstehenden Ansprüche, wobei die elektrische Maschine (110) motorisch und/oder generatorisch betrieben wird.

8. Recheneinheit (112), die dazu eingerichtet ist, ein Verfahren nach einem der vorstehenden Ansprüche durchzuführen.

9. Computerprogramm, das eine Recheneinheit (112) dazu veranlasst, ein Verfahren nach einem der Ansprüche 1 bis 7 durchzuführen, wenn es auf der Recheneinheit (112) ausgeführt wird.

10. Maschinenlesbares Speichermedium mit einem darauf gespeicherten Computerprogramm nach Anspruch 9.

**Claims**

1. A method of switching-off a polyphase electric machine (110) in a motor vehicle, the polyphase electric machine (110) comprising a rotor having a rotor winding (101) and a stator having a polyphase stator winding (110a),

   - wherein in a block mode (210) of the electric machine (110), a parameter influencing a pole wheel voltage vector ($U_p$) of a pole wheel voltage is changed such that the pole wheel voltage reaches a first threshold value ($S_1$),
   - wherein the block mode (210) is deactivated when the first threshold value ($S_1$) is reached and a PWM mode (220) for applying a phase voltage with a phase voltage vector ($U_s$) is activated,
   - wherein the phase voltage vector ($U_s$) and the pole wheel voltage vector ($U_p$) are changed in PWM mode (220) until the parameter influencing the pole wheel voltage reaches a further threshold value ($S_2$),
   - wherein the phase voltage is switched off when the further threshold value ($S_2$) is reached.

2. The method according to claim 1, wherein a magnitude and/or a direction of the pole wheel voltage vector ($U_p$) are used as the at least one parameter influencing the pole wheel voltage vector ($U_p$), wherein

the magnitude of the pole wheel voltage vector ($U_p$) is preferably reduced.

3. The method according to claim 1 or 2, wherein the first threshold value corresponds to a magnitude and/or a direction of the phase voltage vector ($U_s$) of the phase voltage present in the block mode (210).

4. The method according to any one of the preceding claims, wherein the magnitude of the excitation current ($I_f$) and/or the rotational speed ($\omega$) of the electric machine (110) are used as the at least one parameter influencing the pole wheel voltage (210).

5. Method according to any one of the preceding claims, wherein the phase voltage vector ($U_s$) and the pole wheel voltage vector ($U_p$) are changed in PWM mode (220), in particular reduced in amount, in such a way that a phase current ($I_S$) flowing in the stator winding (110a) always corresponds approximately to the value zero.

6. Method according to any one of the preceding claims, wherein the magnitude of the further threshold value ($S_2$) of the parameter influencing the pole wheel voltage, in particular of the excitation current ($I_f$) in PWM mode, corresponds approximately to the value zero.

7. The method according to any one of the preceding claims, wherein the electric machine (110) is motor-driven and/or generator-driven.

8. A computing unit (112) adapted to perform a method according to any one of the preceding claims.

9. A computer program that causes a computing unit (112) to perform a method according to any one of claims 1 to 7, when executed on the computing unit (112).

10. A machine readable storage medium having stored thereon a computer program according to claim 9.

**Revendications**

1. Procédé pour arrêter une machine électrique polyphasée (110) dans un véhicule automobile, dans lequel la machine électrique polyphasée (110) comporte un rotor avec un enroulement de rotor (101) et un stator avec un enroulement de stator polyphasé (110a),

dans lequel, dans un mode de blocage (210) de la machine électrique (110), un paramètre ayant une influence sur un vecteur de tension de roue polaire ($U_p$) d'une roue polaire est changé, de sorte que la tension de roue polaire atteint une première valeur de seuil ($S_1$),

dans lequel le mode de blocage (210) est désactivé lorsque la première valeur de seuil ($S_1$) est atteinte et un mode PWM (220) destiné à appliquer une tension de phase avec un vecteur de tension de phase ($U_s$) est activé,

dans lequel le vecteur de tension de phase ($U_s$) et le vecteur de tension de roue polaire ($U_p$) varient dans le mode PWM (220) jusqu'à ce que le paramètre ayant une influence sur la tension de roue polaire ait atteint une valeur de seuil supplémentaire ($S_2$),

dans lequel la tension de phase est coupée lorsque la valeur de seuil supplémentaire ($S_2$) est atteinte.

2. Procédé selon la revendication 1, dans lequel une grandeur et/ou une direction du vecteur de tension de roue polaire ($U_p$) est utilisée en tant que le au moins un paramètre ayant une influence sur le vecteur de tension de roue polaire ($U_p$), dans lequel la grandeur du vecteur de tension de roue polaire ($U_p$) est de préférence réduite.

3. Procédé selon la revendication 1 ou 2, dans lequel la première valeur de seuil correspond à une grandeur et/ou à une direction du vecteur de tension de phase ($U_s$) de la tension de phase présente dans le mode de blocage (210).

4. Procédé selon l'une des revendications précédentes, dans lequel la grandeur du courant d'excitation ($I_f$) et/ou la vitesse de rotation ($\omega$) de la machine électrique (110) sont utilisées (210) en tant que le au moins un paramètre ayant une influence sur la tension de roue polaire.

5. Procédé selon l'une des revendications précédentes, dans lequel le vecteur de tension de phase ($U_s$) et le vecteur de tension de roue polaire ($U_p$) varient dans le mode PWM (220), et ont en particulier une grandeur réduite, de sorte qu'un courant de phase ($I_s$) circulant dans l'enroulement de stator (110a) correspond toujours approximativement à la grandeur de valeur nulle.

6. Procédé selon l'une des revendications précédentes, dans lequel la grandeur de la valeur de seuil supplémentaire ($S_2$) du paramètre ayant une influence sur la tension de roue polaire, en particulier le courant d'excitation ($I_f$), dans le mode PWM correspond approximativement à la valeur nulle.

7. Procédé selon l'une des revendications précédentes, dans lequel la machine électrique (110) est entraînée comme un moteur et/ou un générateur.

8. Unité de calcul (112) configurée pour mettre en œuvre un procédé selon l'une des revendications précédentes.

9. Programme informatique qui permet à une unité de calcul (112) de mettre en œuvre un procédé selon l'une des revendications 1 à 7, lorsqu'il est exécuté sur l'unité de calcul (112).

10. Support de mémoire lisible par machine sur lequel est stocké un programme informatique selon la revendication 9.

**Fig. 1**

Fig. 2

# Fig. 3a

# Fig. 3b

# Fig. 3c

**Fig. 4**

EP 3 449 560 B1

## Fig. 5a

## Fig. 5b

EP 3 449 560 B1

## Fig. 6a

## Fig. 6b

## Fig. 6c

**EP 3 449 560 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102013215306 A1
- US 2010231151 A1
- JP S605786 A